## Europäisches Patentamt

## European Patent Office

## Office européen des brevets

(19)

(11) Veröffentlichungsnummer: **0 163 601**
**B1**

(12) **EUROPÄISCHE PATENTSCHRIFT**

(45) Veröffentlichungstag der Patentschrift:
**04.01.89**

(51) Int. Cl.⁴: **A 47 B 47/02,** A 47 B 67/00

(21) Anmeldenummer: **85810186.8**

(22) Anmeldetag: **26.04.85**

(54) **Kasten.**

(30) Priorität: **29.05.84 CH 2624/84**

(43) Veröffentlichungstag der Anmeldung:
**04.12.85 Patentblatt 85/49**

(45) Bekanntmachung des Hinweises auf die Patenterteilung:
**04.01.89 Patentblatt 89/1**

(84) Benannte Vertragsstaaten:
**AT BE DE FR GB IT LU NL SE**

(56) Entgegenhaltungen:
**AT-B-356 838**
**GB-A-630 416**
**US-A-1 944 394**
**US-A-2 571 622**
**US-A-3 314 740**

(73) Patentinhaber: **W. SCHNEIDER & CO. AG
Metallwarenfabrik, Alte Dorfstrasse 4, CH- 8135
Langnau a/A (CH)**

(72) Erfinder: **Schneider, Walter, Wildenbühlstrasse 54,
CH- 8135 Langnau a/A (CH)**

(74) Vertreter: **Bosshard, Ernst, Schulhausstrasse 12,
CH- 8002 Zürich (CH)**

## Beschreibung

## Kasten

Die Erfindung bezieht sich auf einen Kasten mit vier Seitenwänden und mit einer aus einem separaten Teil bestehenden Rückwand, wobei zwei zueinander parallele Seitenwände im Bereich der Rückwand je einen rechtwinklig von diesen Seitenwänden abragenden, parallel zur Rückwand verlaufenden ersten Steg aufweisen, jeder dieser ersten Stege einen schräg gegen die benachbarte Seitenwand hin gerichteten Lappen enthalten, die Rückwand an ihren den Seitenwänden benachbarten Kanten je einen in Richtung gegen den ersten Steg hin nach aussen gebogenen, schrägen Randteil aufweist, welcher jeweils den zugeordneten Lappen hintergreift.

Die konventionelle Herstellung von Metall-Kästen erfordert eine aufwendige Herstellung der Bestandteile und das Zusammensetzen ist zeit- und damit kostenaufwendig, wobei üblicherweise Schraubverbindungen oder Schweissarbeiten erforderlich sind.

Aus der GB-A-630 416 ist ein Gehäuse nach dem Oberbegriff des Patentanspruches 1 bekannt, bei dem beidseits der Rückwand je ein Seitenwandblech vorhanden ist, deren Längsränder einwärts abgekröpft sind und in deren Abkröpfungsbereich die umgebogenen Längsränder der Rückwand eingreifen. Nach dem Einschwenken der Seitenwandbleche erfolgt die Fixierung der Rückwand durch je einen von der Innenfläche der Seitenwandbleche abragenden, federnden Blechstreifen, welche sodann mit ihrem der Rückwand zugewandten Rand gegen diese anliegen. Durch Zurückbiegen der federnden Blechstreifen lässt sich der Kasten wieder zusammenklappen.

Demgegenüber besteht die Aufgabe der vorliegenden Erfindung darin, die ineinandersteckbaren Seitenwände und die Rückwand eines Kastens so auszubilden, dass sie ohne Schraub- oder Schweissverbindung dauerhaft und spielfrei fixierbar sind.

Diese Aufgabe wird dadurch gelöst, dass die Seitenwände samt ersten Stegen, Lappen und zweiten Stegen je als einstückige Strangpress-Aluminium-Profilschiene ausgebildet sind, jeder zweite Steg sich parallel und im Abstand zum zugeordneten ersten Steg erstreckt, wobei die Rückwand jeweils den Schlitz zwischen dem zweiten Steg und dem Lappenende durchdringt und gegen den zweiten Steg anliegt und zur spielfreien Lagesicherung der eingesetzten Rückwand die Lappen mindestens stellenweise bleibend verformt sind und dabei gegen die Randteile anliegen.

Das Zusammensetzen des Kastens kann durch einfaches Einhängen der Seitenwände in die umgebogenen Randteile der Rückwand erfolgen. Durch stellenweises Einbiegen der Lappen lässt sich die Rückwand in ihrer Lage sichern. Da keine Schweissnähte erforderlich sind, lassen sich die Metallteile vor dem Zusammenbau mit einer fertigen Oberflächenschicht versehen, also zum Beispiel mit einem galvanischen Überzug, mit einer Farbschicht oder bei Aluminiumteilen mit einer Eloxierschicht. Dies ermöglicht auch den Kasten im zerlegten Zustand raumsparend zu verschiffen und zu lagern und am Bestimmungsort mit wenigen Handgriffen aus vorfabrizierten Teilen zusammenzusetzen.

Vorteilhafterweise weist der Lappen im Bereich seines Fusspunktes eine Kehlung auf, die eine Stellenweise Verformung des Lappens zur Lagesicherung mit einem einfachen Werkzeug ermöglicht.

In der Zeichnung ist ein Ausführungsbeispiel des Erfindungsgegenstandes dargestellt. Es zeigen:

Fig. 1　eine Vorderansicht eines mit drei Türen versehenen Kasten, wie er beispielsweise in Badezimmern zur Aufbewahrung von Toilettenartikeln verwendet wird

Fig. 2　einen Horizontalschnitt durch den Kasten gemäss Fig. 1

Fig. 3　einen Schnitt durch eine Seitenwand mit Rückwand, in einem gegenüber Fig. 2 grössern Maßstab

Fig. 4　einen zu Fig. 3 analogen Schnitt durch eine spiegelbildliche Ausführungsvariante.

Der Kasten enthält vier aus Metall bestehende Seitenwände 1, die zueinander rechtwinklig stehen und an den Ecken durch Eckverbindungsstücke 16 zusammengehalten sind, wie sie beispielsweise in der EP-OS-0 133 605 beschreiben sind. Diese Seitenwände 1 bestehen vorzugsweise je aus einer Strangpress-Aluminium-Profilschiene. In die Ecken dieser Seitenwände 1 greift eine aus Blech bestehende Rückwand 4 mit an allen vier Seiten umgebogenen Randteil 10 ein. Ein derartiger Kasten kann beispielsweise als Badezimmerkasten oder Schrank ausgebildet sein, welcher üblicherweise an einer Wand aufgehängt wird und zur Aufnahme von Toilettenartikeln dient.

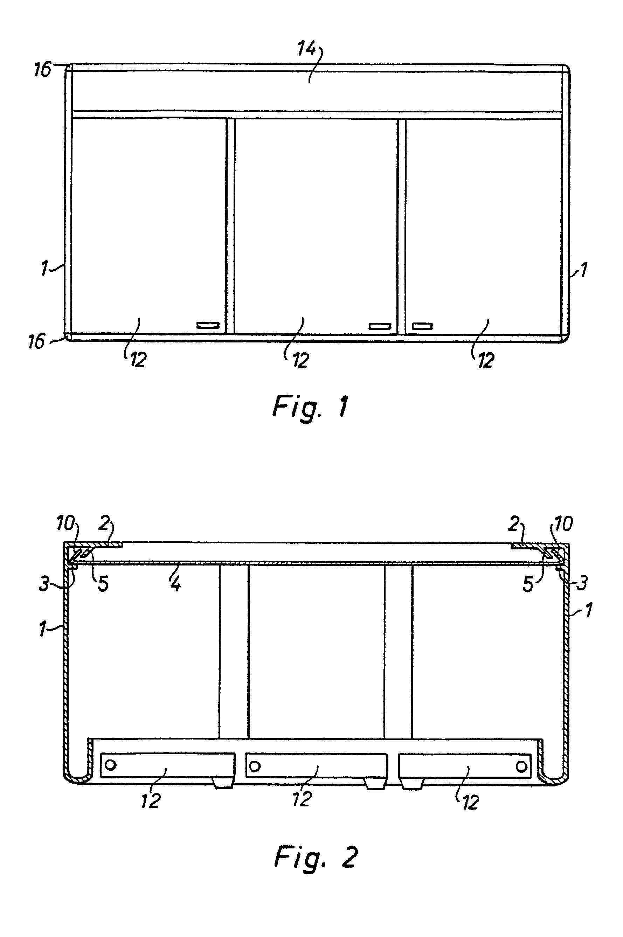

Gemäss Fig. 1 und 2 ist ein solcher Kasten mit drei Türen 12 versehen, wobei dann die Seitenwände 1 türseitig mit einem U-förmig einwärts umgebogenen Rand versehen sind. Die Vorderseite der Türen kann mit Spiegeln versehen sein, und der obere Bereich ist mit einem Beleuchtungsfach 14 versehen.

Im rückwandseitigen Bereich enthalten alle vier Seitenwände je einen ersten, im aufgehängten Zustand des Kastens gegen die Wand anliegenden ersten Steg 2 sowie einen von diesem distanzierten zweiten, kürzeren Steg 3. Diese beiden Stege 2, 3 verlaufen rechtwinklig zur Hauptfläche der jeweiligen Seitenwand 1, erstrecken sich damit parallel zur Rückwand 4 und sind untereinander parallel. Der erste Steg 2 ist etwa viermal so lang wie der zweite Steg 3. Der erste Steg 2 trägt entlang seiner ganzen Länge etwa in seiner Mitte einen schrägen, gegen den zweiten Steg 3 gerichteten V-förmig abgebogenen Lappen 5, der in einem Winkel von etwa 45° zur Rückwand 4 geneigt ist. Die Innenfläche dieses Lappens 5 ist gegen die Ecke 14 gerichtet. Zwischen dem freien Ende 6 dieses Lappens 5 und dem zweiten Steg 3 besteht ein Schlitz 7, der breiter ist als der Blechstärke der Rückwand 4 entspricht. Der Fuss dieses Lappens 5 ist durch eine Kehlnut 9 geschwächt.

Der Randteil 10 bildet zur Rückwand 4 einen Winkel von etwa 45°, erstreckt sich somit ungefähr parallel zum Lappen 5 und hintergreift diesen. Das freie Ende 8 des Randteiles 10 hat zur Innenseite des ersten Steges 2 etwas Spiel. Die Abmessungen des Schlitzes 7 und des umgebogenen Randteiles 10 sind so getroffen, dass mindestens eine der Seitenwände 1 durch eine Schwenkbewegung auf die Rückwand 4 aufgesetzt werden kann, während die drei zuvor eingesetzten Seitenwände auch geradlinig auf die Randteile 10 der Rückwand 4 aufgeschoben werden können.

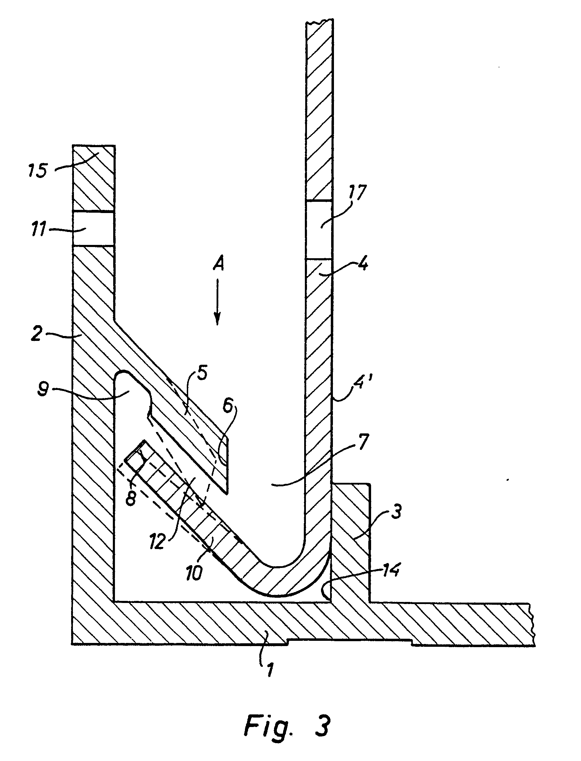

Nach dem Einsetzen aller vier Seitenwände 1 auf die Rückwand 4 erfolgt deren Sicherung in der Weise, dass durch ein Werkzeug in die Lappen Stellenweise je mindestena eine Verformung in Richtung des Pfeiles A eingeprägt wird, wie dies in unterbrochenen Linien in Fig. 3 dargestellt ist. Diese Verformung, vorzugsweise in Gestalt einer Delle, bewirkt, dass der Lappen 5 in den Zwischenraum 12 hineinragt, gegen den Randteil 10 anzuliegen kommt und dessen freies Ende 8 gegen den ersten Steg 2 drückt. Die bleibende Deformierung des Lappens 5 wird durch die Kehlnut 9 erleichtert. Als Folge dieser Material-Deformierung liegt die Rückwand 4 mit ihrer kasteninnenseitigen Fläche 4' satt gegen den zweiten Steg 3 an. Dadurch wird eine verschiebungsfeste Lage der Rückwand 4 relativ zu den Seitenwänden 1 erreicht.

Zum Aufhängen des fertigen Kastens werden an einer Wand zwei kurze Schienenstücke oder eine durchgehende Schiene befestigt, in welche der obere Randbereich 15 des obern horizontalen Steges 2 eingehängt werden kann. Sodann werden unten in mindestens eine Bohrung 11 im ersten Steg 2 eine Schraube zur verschiebungsfesten Halterung des Kastens eingesetzt. Zum Durchstecken des Schraubenkopfes hat die fluchtende Bohrung 17 in der Rückwand 4 einen grössern Durchmesser.

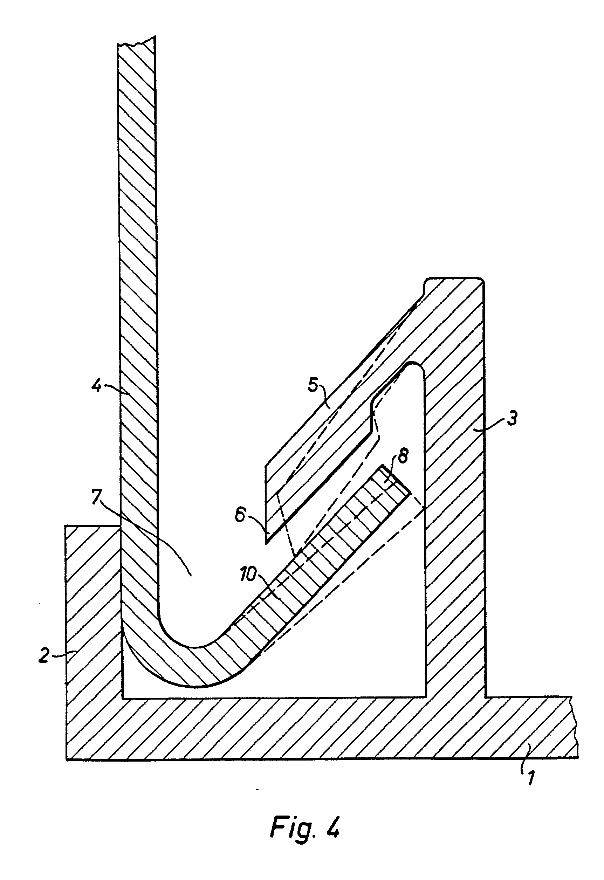

In Fig. 4 ist eine Ausführungsvariante dargestellt, welche im wesentlichen einer spiegelbildlichen Ausbildung zur Fig. 3 entspricht. Der Lappen 5 ist hier am zweiten Steg 3 befestigt und erstreckt sich in Richtung gegen die Ecke, gebildet aus der Seitenwand 1 und dem ersten Steg 2. Die Rückwand 4 liegt gegen den ersten Steg 2 an. Um eine Verbindung der Rückwand 4 mit der Seitenwand 1 durch Einschwenken zu ermöglichen, ist hier der erste Steg 2 kürzer als der zweite Steg 3. Eine spielfreie Verbindung erfolgt auch hier durch Deformierung des Lappens 5 analog zu der in Fig. 3 beschriebenen Ausführungsform. Im übrigen ist die Funktionsweise analog zu der in den Fig. 1 - 3 beschrieben.

**Patentansprüche**

1. Kasten mit vier Seitenwänden und mit einer aus einem separaten Teil bestehenden Rückwand, wobei zwei zueinander parallele Seitenwände (1) im Bereich der Rückwand (4) je einen rechtwinklig von diesen Seitenwänden (1) abragenden, parallel zur Rückwand (4) verlaufenden ersten Steg (2) aufweisen, jeder dieser ersten Stege (2) einen schräg gegen die benachbarte Seitenwand (1) hin gerichteten Lappen (5) enthalten, die Rückwand (4) an ihren den Seitenwänden benachbarten Kanten je einen in Richtung gegen den ersten Steg (2) hin nach aussen gebogenen, schrägen Randteil (10) aufweist, welcher jeweils den zugeordneten Lappen (5) hintergreift, dadurch gekennzeichnet, dass die Seitenwände (1) samt ersten Stegen (2), Lappen (5) und zweiten Stegen (3) je als einstückige Strangpress-Aluminium-Profilschiene ausgebildet sind, jeder zweite Steg (3) sich parallel und im Abstand zum zugeordneten ersten Steg erstreckt, wobei die Rückwand (4) jeweils den Schlitz (7) zwischen dem zweiten Steg (3) und dem Lappenende (6) durchdringt und gegen den zweiten Steg anliegt und zur spielfreien Lagesicherung der eingesetzten Rückwand (4) die Lappen (5) mindestens stellenweise bleibend verformt sind und dabei gegen die Randteile (10) anliegen.

2. Kasten nah Anspruch 1, dadurch gekennzeichnet, dass sich der erste Steg (2) geradlinig über den Lappen (5) hinaus erstreckt.

3. Kasten nach Anspruch 1 oder 2, dadurch gekennzeichnet, dass die Lappen (5) im Bereich ihres Fusspunktes je eine Kehlung (9) aufweisen.

4. Kasten mit vier Seitenwänden und mit einer aus einem separaten Teil bestehenden Rückwand, wobei zwei zueinander parallele Seitenwände (1) im Bereich der Rückwand (4) je einen rechtwinklig von diesen Seitenwänden (1) abragenden, parallel zur Rückwand (4) verlaufenden ersten Steg (2) aufweisen und die Rückwand (4) an ihren den Seitenwänden benachbarten kanten je einen umgebogenen, schrägen Randteil (1) aufweist, dadurch gekennzeichnet, dass die Seitenwände (1) samt ersten Stegen (2) und zweiten Stegen (3) je als einstückige Strangpress-Aluminium-Profilschiene ausgebildet sind, jeder zweite Steg (3) sich parallel zum zugeordneten ersten Steg erstreckt und einen schräg gegen die benachbarte Seitenwand und gegen den ersten Steg hin gerichteten Lappen (5) enthält, welcher den Randteil (10) der Rückwand (4) hintergreift, wobei die Rückwand (4) jeweils den Schlitz (7) zwischen dem ersten Steg (2) und dem Lappenende (6) durchdringt und gegen den ersten Steg (2) anliegt und zur spielfreien Lagesicherung der eingesetzten Rückwand (4) die Lappen (5) mindestens stellenweise bleibend verformt sind und dabei gegen die Randteile (10) anliegen.

## Claims

1. Cupboard comprising four lateral walls and a back wall consisting of a separate component, wherein two parallel lateral walls (1) each possess, in the region of the back wall (4), a first flange (2) projecting perpendicularly from these lateral walls (1) and parallel to the back wall (4), each of these first flanges (2) contains a fin (5) orientated obliquely towards the adjacent lateral wall (1), the back wall (4) possesses, at each of its edges adjacent to the lateral walls, an oblique edge portion (10) bent outwards towards the first flange (2), which edge portion engages behind the associated fin (5), characterized in that the lateral talls (1), together with first flanges (2), fins (5) and second flanges (3), arc each constructed as a single-piece extruded aluminium section, and each second flange (3) extends parallel to and at a distance from the associated first flange, the back wall (4) in each case penetrating through the slit (7) between the second flange (3) and the end (6) of the fin and bearing against the second flange, the fins (5) being at least locally permanently deformed and pressing against the edge portions (10) in order to secure the inserted back wall (4) in position without play.

2. Cupboard according to claim 1, characterized in that the first flange (2) extends in a straight line beyond the fin.

3. Cupboard according to claim 1 or 2, characterized in that the fins (5) each have, in the region of their base, a throat (9).

4. Cupboard comprising four lateral walls and a back wall consisting of a separate component, where in two parallel lateral walls (1) each possess in the region of the back wall (4), a first flange (2) projecting perpendicularly from these lateral walls (1) and parallel to the back wall (4), and the back wall (4) possesses, at each of its edges adjacent to the lateral talls, a bent-over oblique edge portion (1), characterized in that the lateral walls (1), together with first flanges (2) and second flanges (3), are each constructed as a single-piece extruded aluminium section, and each second flange (3) extends parallel to the associated first flange and contains a fin (5), orientated obliquely towards the adjacent lateral wall and towards the first flange, which fin engages behind the edge portion (10) of the back wall (4), the back wall (4) in each case penetrating through the slit (7) between the first flange (2) and the end (6) of the fin and bearing against the first flange (2), and the fins (5) being at least locally permanently deformed and bearing against the edge portions (10) for the purpose of securing the inserted back tall (4) in position without play.

## Revendications

1. Armoire ayant quatre parois latérales et un derrière constitué d'une pièce distincte, deux parois latérales (1) parallèles entre elles comportant chacune, dans la région du derrière (4), une première réglette (2) qui est en saillie à angle droit de ces parois latérales (1) et qui s'étend parallèlement au derrière (4), chacune de ces premières réglettes (2) comportant une patte (5) dirigée en étant inclinée vers la paroi latérale (1) voisine, le derrière (4) comportant, sur ses bords voisins des parois latérales, respectivement des parties marginales (10) inclinées, coudées vers l'extérieur en direction de la première réglette (2) et qui s'accrochent sous les pattes (5) associées, caractérisée en ce que les parois latérales (1) sont constituées, ensemble avec les premières réglettes (2), les pattes (5) et des secondes réglettes (3), sous la forme d'une barre profilée d'aluminium filée à la presse d'un seul tenant, chaque seconde réglette (3) s'étend parallèlement à la première réglette qui lui est associée et à distance de celle-ci, le derrière (4) passant dans la fente (7) comprise entre la seconde réglette (3) et l'extrémité de la patte (6) et s'appliquant sur la seconde réglette et, pour bloquer en position sans jeu le derrière (4) monté, les pattes (5) sont déformées de manière permanente au moins par endroits et s'appliquent ainsi sur les parties marginales (10).

2. Armoire suivant la revendication 1, caractérisée en ce que la première réglette (2) s'étend rectilignement au-dessus de la patte (5).

3. Armoire suivant la revendication 1 ou 2, caractérisée en ce que les pattes (5) comportent dans la région de leur pied une gorge (9).

4. Armoire ayant quatre parois latérales et un derrière constitué d'une pièce distincte, deux parois latérales (1) parallèles entre elles comportant chacune, dans la région du derrière (4), une première réglette (2) qui est en saillie à angle droit des parois latérales (1) et qui s'étend parallèlement au derrière (4), celui-ci (4) comportant sur ses bords voisins des parois latérales une partie marginale (1) coudée inclinée, caractérisée en ce que les parois latérales (1) sont constituées ensemble avec les premières réglettes (2) et des secondes réglettes (3), sous la forme d'une barre profilée d'aluminium filée à la presse d'un seul tenant, chaque seconde réglette (3) s'étendant parallèlement à la première réglette qui lui est associée et comportant une patte qui est dirigée en étant inclinée par rapport à la paroi latérale voisine et par rapport à la première réglette et qui s'accroche sous la partie marginale (10) du derrière (4), le derrière (4) passant dans la fente (7) entre la première réglette (2) et l'extrémité de la patte (6) et s'appliquant sur la première réglette (2) et, pour bloquer en position sans jeu le derrière (4) monté, les pattes (5) sont déformées de manière permanente au moins par endroits et s'appliquent ainsi sur les parties marginales (10).

Fig. 1

Fig. 2

1

Fig. 3

*Fig. 4*